Europäisches Patentamt

European Patent Office

Office européen des brevets

(11) Veröffentlichungsnummer: **0 015 375**
A1

# (12) EUROPÄISCHE PATENTANMELDUNG

(21) Anmeldenummer: 80100345.0

(22) Anmeldetag: 23.01.80

(51) Int. Cl.³: **B 32 B 13/14**, B 32 B 5/06,
E 04 C 2/26

(30) Priorität: 26.01.79 DE 2902974

(43) Veröffentlichungstag der Anmeldung: 17.09.80
Patentblatt 80/19

(84) Benannte Vertragsstaaten: **BE CH DE FR GB IT NL SE**

(71) Anmelder: **HOECHST AKTIENGESELLSCHAFT, Zentrale
Patentabteilung Postfach 80 03 20,
D-6230 Frankfurt/Main 80 (DE)**

(72) Erfinder: **Disselbeck, Dieter, Am Rehsteig 3, D-6232 Bad
Soden am Taunus (DE)**
Erfinder: **Eckardt, Peter, Dr., Brandenburger Weg 14,
D-6238 Hofheim am Taunus (DE)**

(54) **Verfahren zur Herstellung von Bauplatten.**

(57) Zur Herstellung von Bauplatten mit verbesserter Haltbarkeit wird ein Baustoff (3), der noch nicht abgebunden hat, zwischen zwei textile Flächengebilde (1, 1') eingefüllt. Danach werden die beiden textilen Flächengebilde vor dem Abbinden des Baustoffes miteinander verbunden, z. B. durch Haltefäden (8), die hindurch genäht, genadelt oder gewirkt werden. Es resultiert eine Bauplatte mit beiderseits aufgebrachten textilen Flächengebilden.

EP 0 015 375 A1

- 1 -

HOECHST AKTIENGESELLSCHAFT HOE 79/F 014     Dr.v.F./a

Verfahren zur Herstellung von Bauplatten

Die Erfindung betrifft ein Verfahren zur Herstellung von Bauplatten, die aus einem Baustoff mit beiderseits aufgebrachten textilen Flächengebilden bestehen, wobei die textilen Flächengebilde kraftschlüssig miteinander verbunden sind.

Zur Verbesserung der mechanischen Eigenschaften von Baustoffen werden diese durch Einbettung von Stäben (Stahl) oder Fasern (Asbest, Glas Kohlenstoff, synthetische Polymere .....) verstärkt. Dabei treten häufig Sedundärprobleme auf: bei Stahl Korrosion, bei Asbest Entstehung von gefährlichem Staub, bei synthetischen Polymeren mangelnde Haftung zu den Baustoffen.

Andere Lösungen zur Verbesserung der mechanischen Eigenschaften bestehen darin, daß ein Kernmaterial mit Deckschichten aus Blech, Karton, Gewebe kaschiert wird. Diese sogenannten Sandwichsysteme verbessern die mechanischen Eigenschaften von Baumaterialien in sehr hohem Maße, sie haben aber den Nachteil, daß die Haftung der verschiedenen Schichten problematisch und der Aufbau der Sandwichkonstruktion mehrere kostenintensive Arbeitsgänge erfordert.

Aus der DE-OS 1 535 736 sind gewebte Füllplatten bekannt. Dabei handelt es sich um ein ausdehnbares, mehrlagiges, mit Rippen versehenes Gewebe, wobei die gewebten Rippenstücke schlaff zwischen zwei Außenlagen liegen und sich die Rippen spannen, wenn das Gewebe als Ganzes ausgedehnt ist und unter Spannung steht. Dies geschieht dann, wenn ein Füllstoff zwischen die flach liegenden Außengewebelagen eingebracht wird. Es hat sich gezeigt, daß das Einbringen von Baustoffen, wie z.B. Beton oder Leichtbeton mit z.T. grobkörnigen Zuschlagsstoffen sowie Schaumstoffen in ein derartiges flach liegendes Gewebe mit großen Schwierigkeiten verbunden ist. Es wird deshalb in der DE-OS 1 535 736 gelehrt, daß das Gewebe unter Verwendung eines Spannrahmens oder einer anderen Vorrichtung geöffnet wird und Kernstäbe zwischen den Rippen und den einander gegenüberliegenden Gewebelagen eingeführt werden.

Aufgabe der Erfindung ist es, ein Verfahren zum Herstellen einer Bauplatte zur Verfügung zu stellen, bei dem die genannten Probleme nicht auftreten.

Diese Aufgabe wurde dadurch gelöst, daß ein noch nicht abgebundener Baustoff zwischen die textilen Flächengebilde eingefüllt wird, und daß die beiden textilen Flächengebilde durch Haltefäden nach dem Einfüllen, aber vor dem Abbinden des Baustoffes miteinander verbunden werden.

Als textile Flächengebilde können eingesetzt werden Gewebe, Gewirke, Gestricke, geknüpfte Netze, textile Verbundstoffe wie Vliese und spunbonds. Das Material kann aus natürlichen oder synthetischen Fasern oder Monofilen bestehen, wobei die synthetischen besonders bevorzugt werden. Beispielsweise können Fasern oder Fäden aus Polypropylen, Polyamid-6, Polyäthylenterephthylat, aber auch Glas- oder Kohlenstoff-Fäden verwendet werden.

Als Baustoff können noch nicht erhärtete Materialien z.B. auf Basis Zement, Gips oder Kalk eingesetzt werden. Diese können auch Leichtzuschläge wie Perlite, Vermiculite, Blähton o. ä. enthalten oder aber direkt geschäumt werden (Schaumbeton, Schaumgips).

Die Haltefäden, die nach dem Einfüllen des Baustoffes, senkrecht oder in einem beliebigen anderen Winkel die beiden textilen Gebilde miteinander fest verbinden und bei Belastung einen großen Teil der auftretenden Kräfte übertragen, können aus den obengenannten natürlichen oder synthetischen Materialien bestehen. Einsetzbar sind neben Fäden, Fasern auch monofile Drähte oder geschnittene Folien. Die Haltefäden können durch Nähen, Nadeln oder Wirken eingebracht werden.

Bei der nach dem erfindungsgemäßen Verfahren hergestellten Bauplatte dienen die zwei die Bauplatte begrenzenden textilen Flächengebilde zusammen mit den sie verbindenden Haltefäden gleichzeitig als Schalung und als Bewehrung.

Die Bauplatte eignet sich für verschiedene Anwendungen wie z.B. als leichtes Flächentragwerk, als Fassadenplatte oder Wärmedämmplatte. Durch die besondere Konstruktion ist es möglich, auch bröselige und stoßempfindliche Baustoffe, wie anorganische Schäume auf Basis Zement, Gips oder Kalk, insbesondere für den Wärmedämmsektor zum Einsatz zu bringen.

Als zusätzlicher Vorteil ergibt sich, daß die den Baustoff umschließenden Gewebelagen für Oberflächenveredlungen als Haftgrundlage vorhanden sind.

Vorteilhaft ist auch, daß z.B. eine Wärmedämmplatte auf Basis eines anorganischen Schaumes durch die Einbettung dieses spröden Baustoffes in den flächigen textilen Gitterträger nagelfest ist, d.h. auf die sonst bei Schäumen übliche problematische Verklebung kann verzichtet werden.

0015375

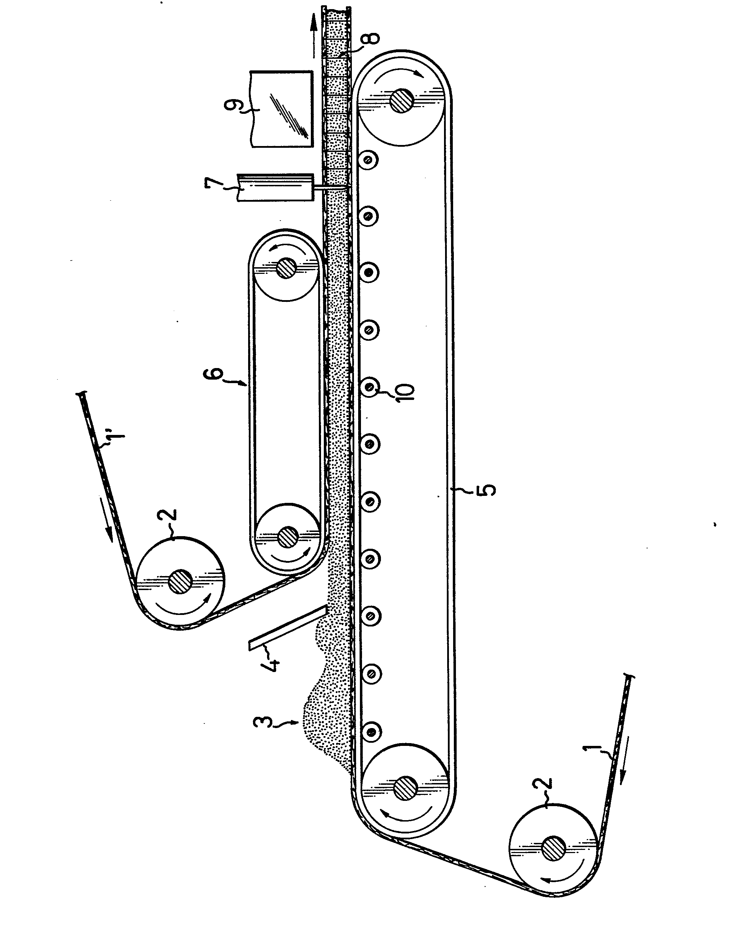

Die Figur zeigt das Schema einer Vorrichtung zur Durchführung des Verfahrens. Darin bedeuten 1 und 1' die textilen Flächengebilde, 2 Zufuhrwalzen, 3 den Baustoff, 4 eine Rakelvorrichtung, 5 ein Transportband, 6 eine Kalibriereinrichtung, 7 die Nähvorrichtung, 8 die Haltefäden, 9 die Trocknungsstufe und 10 Stützvorrichtungen. Zur Durchführung des Verfahrens wird das untere textile Flächengebilde (1) über eine Zuführwalze (2) dem Transportband (5) zugeleitet. Der Baustoff (3) wird auf das textile Flächengebilde (1) aufgebracht und über eine Rakelvorrichtung (4) der Kalibriervorrichtung zugeführt, wobei auch das obere textile Flächengebilde 1' einläuft. Mit der Nähvorrichtung (7) werden die beiden textilen Flächengebilde durch Haltefäden miteinander verbunden. Beim Durchlauf durch die Trocknungsstufe (9) wird der bis dahin nicht abgebundene Baustoff getrocknet.

0015375

Patentanspruch:

Verfahren zur Herstellung von Bauplatten, die aus einem Baustoff mit beiderseits aufgebrachten textilen Flächengebilden bestehen, dadurch gekennzeichnet, daß ein noch nicht abgebundener Baustoff zwischen die textilen Flächengebilde eingefüllt wird, und daß die beiden textilen Flächengebilde durch Haltefäden nach dem Einfüllen, aber vor dem Abbinden des Baustoffes miteinander verbunden werden.

Europäisches
Patentamt

**EUROPÄISCHER RECHERCHENBERICHT**

0015375
Nummer der Anmeldung

EP 80 10 0345

| | **EINSCHLÄGIGE DOKUMENTE** | | **KLASSIFIKATION DER ANMELDUNG (Int.Cl. ³)** |
|---|---|---|---|
| Kategorie | Kennzeichnung des Dokuments mit Angabe, soweit erforderlich, der maßgeblichen Teile | betrifft Anspruch | |
| A | FR - A - 2 019 522 (COLLINS & AIKMAN CORP.) | | B 32 B 13/14 5/06 E 04 C 2/26 |
| A | DE - A - 1 535 736 (WEAVING COMP) | | |
| A | DE - A - 1 559 527 (GROHMANN) | | |
| | ---- | | |

**RECHERCHIERTE SACHGEBIETE (Int. Cl. ³)**

B 32 B
E 04 C 2/24
2/26
B 29 D 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort: Den Haag | Abschlußdatum der Recherche 12-05-1980 | Prüfer VAN THIELEN |
|---|---|---|

EPA form 1503.1 06.78